# FASCICULE DE BREVET EUROPEEN

(11) **EP 3 904 157 B1**
(45) Date de publication et mention de la délivrance du brevet: **23.08.2023**
(21) Numéro de dépôt: 21171450.6
(22) Date de dépôt: 30.04.2021
(51) Int. Cl.: B60N 2/42, B60N 2/50

(54) **SIÈGE POUR VÉHICULE COMPRENANT UN SYSTÈME DE RETENUE DU DISPOSITIF DE RÉGLAGE ET DE SUSPENSION**
SITZ FÜR FAHRZEUG, DER EIN RÜCKHALTESYSTEM FÜR DIE EINSTELL- UND AUFHÄNGUNGSVORRICHTUNG UMFASST
VEHICLE SEAT COMPRISING A SYSTEM FOR RETAINING THE ADJUSTMENT AND SUSPENSION DEVICE

(30) Priorité: 30.04.2020 FR 2004323
(43) Date de publication de la demande: 03.11.2021
(73) Titulaire: FAURECIA Sièges d'Automobile, 92000 Nanterre (FR)
(72) Inventeur: YOUNES, Mustapha, 92390 VILLENEUVE LA GARENNE (FR); SEILLE, Sébastien, 91640 BRIIS-SOUS-FORGES (FR)
(74) Mandataire: Lavoix

(56) Documents cités:
- EP-A1- 1 050 428
- FR-A- 743 388
- US-A- 1 647 247

## Description

La présente invention concerne un siège pour véhicule comprenant un châssis destiné à être monté sur un plancher du véhicule, une assise, un dispositif de réglage et de suspension comportant une base fixée sur le châssis et un plateau fixé sur une surface inférieure de l'assise, le plateau étant monté mobile en translation par rapport à la base selon une direction d'élévation.

Ce type de siège est par exemple fixé à l'intérieur d'un véhicule utilitaire tel qu'un fourgon, un camion, une camionnette, un véhicule frigorifique, etc.

EP 1 050 428 A1 décrit un exemple de ce type de siège.

US 1 647 247 A décrit un siège permettant de limiter le jeu latéral.

FR 743 338 A décrit un siège avec un système de suspension comprenant un levier pivotant sur un support fixé au plancher de la voiture ou deux leviers articulés entre eux.

En cas de choc du véhicule, le siège et son occupant sont brutalement stoppés dans leur mouvement. Ils sont alors projetés par inertie vers l'avant selon la direction longitudinale. Plus particulièrement, le plateau du dispositif de réglage et de suspension se déplace et pivote vers l'avant autour d'un axe transversal sensiblement perpendiculaire à la direction d'avancement du véhicule. Ceci entraine un déplacement important du bassin de l'occupant vers l'avant et par glissement le long de l'assise du siège. L'occupant peut alors subir de graves lésions notamment au niveau de la région lombaire et de la ceinture pelvienne.

Un objectif de l'invention est de pallier cet inconvénient en proposant un siège permettant de limiter le déplacement du bassin de l'occupant lors d'un choc du véhicule et d'améliorer la stabilité et la résistance du siège.

A cet effet, l'invention porte sur un siège selon la revendication 1.

Ainsi, grâce à l'organe de retenue et à l'élément de retenue, le plateau du dispositif de réglage et de suspension ne peut pas se déplacer vers l'avant selon la direction longitudinale lors d'un choc du véhicule et ceci quelle que soit la position du plateau et donc de l'assise du siège selon la direction d'élévation avant le choc. Lors du choc, le plateau et l'assise ne peuvent plus pivoter par rapport au châssis, le déplacement du bassin de l'occupant du siège est limité et la sécurité de l'occupant est améliorée.

Selon des modes de réalisation différents, le siège comprend en outre une ou plusieurs des caractéristiques des revendications dépendantes 2 à 9.

D'autres aspects et avantages de l'invention apparaitront à la lecture de la description qui suit, donnée à titre d'exemple et faite en référence aux dessins annexés parmi lesquels :
- [Fig 1] la figure 1 est une vue en perspective d'un siège selon l'invention dans lequel le dispositif de réglage et de suspension est dans une position intermédiaire,
- [Fig 2] la figure 2 est une vue en perspective du siège de la figure 1 dans lequel le dispositif de réglage et de suspension est dans une position haute,
- [Fig 3] la figure 3 est une vue en perspective de l'organe de retenue du siège de la figure 1,
- [Fig 4] la figure 4 est une vue en perspective d'un siège selon un deuxième mode de réalisation de l'invention, et
- [Fig 5] la figure 5 est une vue en perspective de l'organe de retenue du siège de la figure 4.

Dans la description qui suit, le terme « longitudinal » est défini par rapport à la direction selon laquelle circule normalement le véhicule, c'est-à-dire la direction principale d'élongation de l'habitacle du véhicule dans lequel est placé un siège selon l'invention dans des conditions habituelles d'utilisation, c'est-à-dire que l'occupant du siège est face à la route.

Le terme « transversal » est défini par rapport à une direction sensiblement perpendiculaire à la direction longitudinale L. Cette direction correspond à la largeur du véhicule. La direction d'élévation Z est sensiblement perpendiculaire aux directions longitudinale L et transversale T et correspond à la hauteur du véhicule. La direction d'élévation Z est sensiblement verticale lorsque le véhicule est sur un sol horizontal. Les termes « avant » et « arrière » sont définis par rapport au sens de la direction d'avancement usuelle du véhicule selon la direction longitudinale L. De la même manière, les termes « supérieur » et « inférieur » sont définis par rapport à la direction d'élévation.

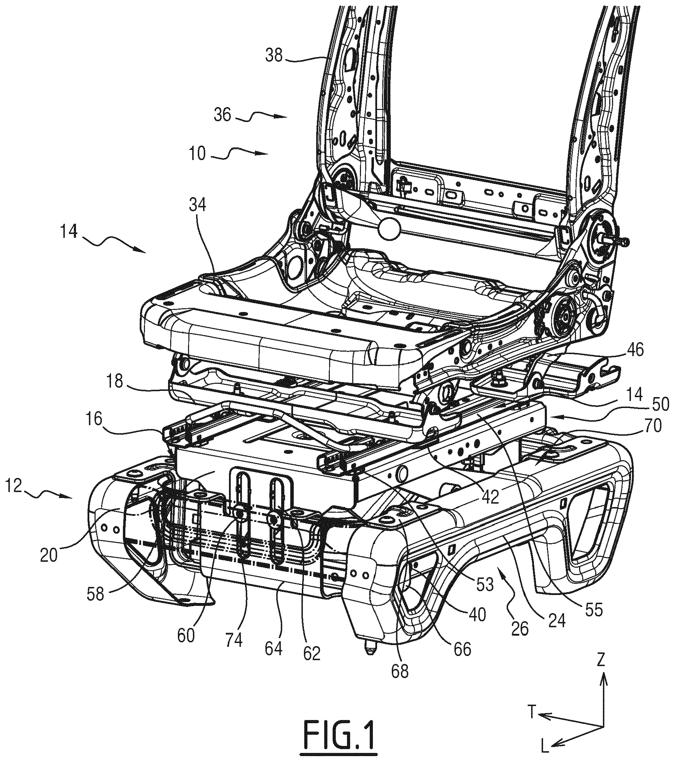

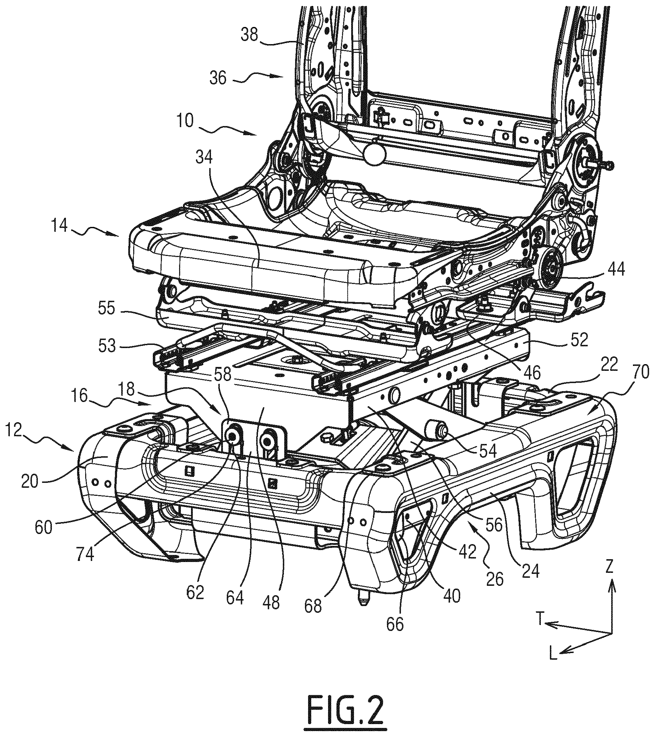

Les figures 1 et 2 représentent un siège 10 pour véhicule selon l'invention.

Le véhicule (non représenté) est par exemple un véhicule utilitaire tel qu'un fourgon, un camion, une camionnette, un véhicule frigorifique, etc.

En variante, le véhicule est de tout type.

Le siège 10 est par exemple un siège conducteur ou un siège passager orienté selon la direction longitudinale L vers le sens d'avancement normal du véhicule.

Le siège 10 comprend un châssis 12 destiné à être monté sur un plancher du véhicule, une assise 14, un dispositif de réglage et de suspension 16 relié à l'assise 14 et un système de retenue 18 retenant une partie du dispositif de réglage et de suspension 16 sur le châssis 12.

Le châssis 12 comprend un tronçon avant 20 et un tronçon arrière 22, s'étendant chacun selon une direction sensiblement parallèle à la direction transversale T, et deux tronçons latéraux 24 reliant les tronçons avant 20 et arrière 22 et s'étendant chacun selon une direction parallèle à la direction longitudinale L.

Le châssis 12 définit entre les tronçons avant 20, arrière 22 et latéraux 24 un logement central 26 recevant le dispositif de réglage et de suspension 16.

Chacun des tronçons avant 20, arrière 22 et latéraux 24 comprend respectivement une paroi avant intérieure, une paroi arrière intérieure et deux parois latérales intérieures définissant entre elles le logement central 26.

De manière connue, l'assise 14 comprend par exemple un coussin (non représenté) monté sur une armature 34.

Le siège 10 comprend en outre, également de manière connue, un dossier 36 relié à l'assise 14 et comportant un coussin (non représenté) monté sur une armature 38.

Le dispositif de réglage et de suspension 16 comprend une base 40 fixée sur le châssis 12 et un plateau 42 relié à la base 40 et fixé sur l'assise 14.

Le plateau 42 est mobile en translation par rapport à la base 40 selon la direction d'élévation Z de manière réversible entre une position basse proche de la base 40, une position haute éloignée de la base 40 (figure 2) et une pluralité de positions d'élévation intermédiaires (figure 1).

Ceci permet le réglage en hauteur de la position de l'assise 14 afin de l'adapter au gabarit de son occupant.

Le plateau 42 comprend une surface supérieure 44 fixée à une surface inférieure 46 de l'assise 14, une paroi avant 48, une paroi arrière 50 et deux parois latérales 52 reliées aux parois avant et arrière 48, 50. Les parois avant 48, arrière 50 et latérales 52 sont reliées à la paroi supérieure 44.

Par « fixée à la surface inférieure de l'assise », on entend que le plateau 42 est fixé soit directement sans élément intermédiaire à la surface inférieure 46 de l'assise 14, soit par l'intermédiaire d'un ou de plusieurs éléments intermédiaires.

Dans le premier mode de réalisation, le siège 10 comprend en outre deux rails de guidage 53 fixés sur la surface supérieure 44 du plateau 42 coopérant avec deux organes de fixation 55 fixés sur la surface inférieure 46 de l'assise 14 permettant de rendre l'assise 14 mobile en translation par rapport au plateau 42 selon la direction longitudinale L. Ceci permet à l'occupant du siège 10 de s'avancer ou de se reculer par rapport à la planche de bord.

Dans chacune des positions d'élévation, la surface supérieure 44 du plateau 42 s'étend principalement dans un plan supérieur sensiblement perpendiculaire à la direction d'élévation Z, c'est-à-dire, lorsque le siège 10 est fixé sur le plancher du véhicule, dans un plan sensiblement parallèle au plancher du véhicule.

Les parois avant 48, arrière 50 et latérales 52 s'étendent principalement dans un plan sensiblement perpendiculaire au plan supérieur.

Les parois avant 48, arrière 50 et latérales 52 du plateau 42 sont respectivement orientées vers les parois avant intérieure, arrière intérieure et latérales intérieures du châssis 12 au moins dans la position basse du plateau 42.

De manière connue, le dispositif de réglage et de suspension 16 comprend en outre au moins un élément amortisseur (non représenté) destiné à amortir le déplacement de l'assise 14 selon la direction d'élévation Z. Ceci permet de limiter les vibrations ressenties par l'occupant du siège 10 lorsque le véhicule est en mouvement.

La base 40 et le plateau 42 sont reliés entre eux par un mécanisme 54 connu de l'état de la technique.

Par exemple, le mécanisme 54 comprend des éléments de liaison 56 en ciseaux reliant le plateau 42 et la base 40 du dispositif de réglage et de suspension 16. Ceci permet de maintenir la surface supérieure 44 du plateau 42 sensiblement parallèle au plancher du véhicule dans toutes les positions d'élévation.

Le dispositif de réglage et de suspension 16 comprend par exemple un organe d'actionnement (non représenté) permettant à l'occupant du siège 10 de déplacer le plateau 42, et par conséquent l'assise 14, entre les différentes positions d'élévation.

L'actionnement du dispositif de réglage et de suspension 16 est par exemple hydraulique, pneumatique ou électrique.

Selon l'invention, le système de retenue 18 assure une liaison entre le plateau 42 du dispositif de réglage et de suspension 16 et le châssis 12.

Le système de retenue 18 comprend- au moins un organe de retenue 58 fixé sur le châssis 12 et au moins un élément de retenue 60 fixé sur le plateau 42.

Dans le premier mode de réalisation, le système de retenue 18 comprend deux organes de retenue 58 fixés sur le châssis 12, et deux éléments de retenue 60 fixés sur deux parois opposées 48, 50 ; 52 du plateau 42.

Dans le premier mode de réalisation (figures 1 à 3), les éléments de retenue 60 sont fixés sur les parois avant 48 et arrière 50 du plateau 42.

Chaque organe de retenue 58 définit au moins une ouverture traversante 62 s'étendant principalement selon une direction principale d'élongation sensiblement parallèle à la direction d'élévation Z.

Selon un premier mode de réalisation, chaque organe de retenue 58 comprend deux ouvertures traversantes 62 s'étendant chacune selon une direction principale d'élongation sensiblement parallèle à la direction d'élévation Z. Dit autrement, les deux ouvertures traversantes 62 sont parallèles entre elles.

Les deux ouvertures 62 présentent une même dimension selon la direction d'élongation.

Par exemple, la dimension selon la direction d'élongation est comprise entre 5 cm et 30 cm.

De préférence, les organes de retenue 58 sont disposés à l'opposé l'un de l'autre de part et d'autre du châssis 12.

Plus particulièrement, chaque organe de retenue 58 comprend de préférence une plaque principale 64 définissant la ou les ouverture(s) 62 et s'étendant principalement selon un plan d'élongation sensiblement parallèle à la direction d'élévation Z.

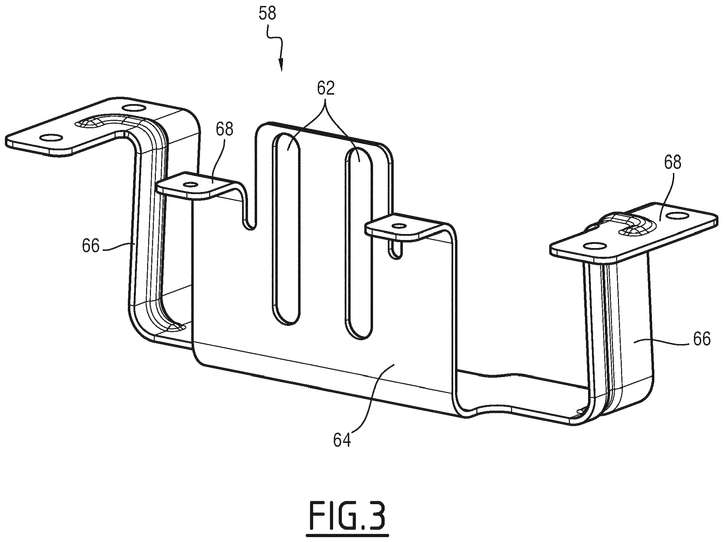

Comme visible plus particulièrement sur la figure 3, chaque organe de retenue 58 comprend en outre deux plaques secondaires 66 reliées à la plaque principale 64 et s'étendant principalement chacune dans un plan sensiblement perpendiculaire au plan d'élongation de la plaque principale 64.

Plus particulièrement, dans le premier mode de réalisation, la plaque principale 64 de chacun des organes de retenue 58 est fixée respectivement sur le tronçon avant 20 et le tronçon arrière 22 du châssis 12.

Chaque plaque principale 64 s'étend au moins en partie en saillie de la surface supérieure 70 des tronçons avant 20 et arrière 22 du châssis 12.

De préférence, chaque plaque principale 64 est fixée sensiblement à équidistance des tronçon latéraux 24 du châssis 12 le long du tronçon avant 20 et du tronçon arrière 22 du châssis 12.

Ainsi, les ouvertures traversantes 62 sont disposées sensiblement symétriquement de part et d'autre d'un plan médian d'élévation passant par une direction parallèle à la direction longitudinale L.

Dans un mode de réalisation particulier dans lequel la plaque principale 64 définit une unique ouverture traversante 62, l'organe de retenue 58 est fixé sur le châssis 12 de sorte que l'ouverture 62 soit à équidistance des tronçons latéraux 24 du châssis 12.

Les plaques secondaires 66 de chacun des organes de retenue 58 sont fixées sur les tronçons latéraux 24 du châssis 12.

De préférence, chaque organe de retenue 58 comprend des pattes de fixation 68 fixant l'organe de retenue 58 sur le châssis 12.

Dans le premier mode de réalisation, chaque organe de retenue 58 comprend deux pattes de fixation 68 reliées à la plaque principale 64 et deux pattes de fixation 68 reliées respectivement aux plaques secondaires 66.

Les pattes de fixation 68 s'étendent principalement dans un plan sensiblement perpendiculaire au plan d'élongation de chacune des plaques respectives 64, 66.

Les pattes de fixation 68 sont maintenues en appui contre une surface supérieure 70 de chacun des tronçons avant 20, arrière 22 et latéraux 24 du châssis 12.

De préférence, au moins une partie de chaque plaque principale 64 de chacun des organes de retenue 58 est en appui contre la paroi avant intérieure et la paroi arrière intérieure du châssis 12. De manière similaire, au moins une partie de chacune des plaques secondaires 66 de chacun des organes de retenue 58 est appui sur une paroi latérale intérieure du châssis 12.

Ceci permet de répartir les efforts sur l'ensemble du châssis 12 en cas de choc lorsque le plateau 42 subit une force de poussée selon la direction longitudinale L. La résistance mécanique des organes de retenue 58 est améliorée et la déformation des organes de retenue 58 est limitée.

L'organe de retenue 58 est de préférence métallique.

Dans le premier mode de réalisation, le système de retenue 18 comprend deux éléments de retenue 60 fixés sur la paroi avant 48 du plateau 42 et deux éléments de retenue 60 fixés sur la paroi arrière 50 du plateau 42.

Chaque élément de retenue 60 s'étend en saillie de sa paroi respective 48, 50 selon une direction sensiblement perpendiculaire à la paroi 48, 50 respective et sensiblement parallèle à la direction longitudinale L.

Chaque élément de retenue 60 comprend par exemple une tige fixée sur la paroi 58, 60 du plateau 42 et une tête 74 reliée à la tige.

L'élément de retenue 60 est par exemple formé par une vis, un boulon ou un pion métallique.

Selon l'invention, chaque ouverture traversante 62 des organes de retenue 58 reçoit un des éléments de retenue 60 libre en translation selon la direction principale d'élongation, l'ouverture traversante 62 retenant ledit élément de retenue 58 selon une direction de retenue sensiblement parallèle à la direction longitudinale L en cas de choc du véhicule, notamment en cas de choc selon la direction longitudinale L (choc frontal avant ou choc arrière) ou de tout choc comprenant une composante selon la direction longitudinale L. Dit autrement, l'ouverture traversante 62 retient l'élément de retenue 58 selon la direction de retenue lorsqu'une force supérieure à une force prédéterminée est appliquée sur le plateau 42 selon la direction longitudinale.

Ainsi, lors de l'actionnement du dispositif de réglage et de suspension 16, c'est-à-dire lorsque le plateau 42 se déplace dans une des positions d'élévation, l'élément de retenue 60 coulisse dans l'ouverture traversante 62 selon la direction principale d'élongation de l'ouverture 62.

La tête 74 de l'élément de retenue 60 présente une dimension transversale supérieure à la dimension transversale de l'ouverture 62. Ainsi, la tête 74 de l'élément de retenue 60 ne peut pas passer au travers de l'ouverture 62 selon la direction longitudinale L. Ceci permet d'empêcher le déplacement du plateau 42 par rapport au châssis selon la direction longitudinale L en cas de choc.

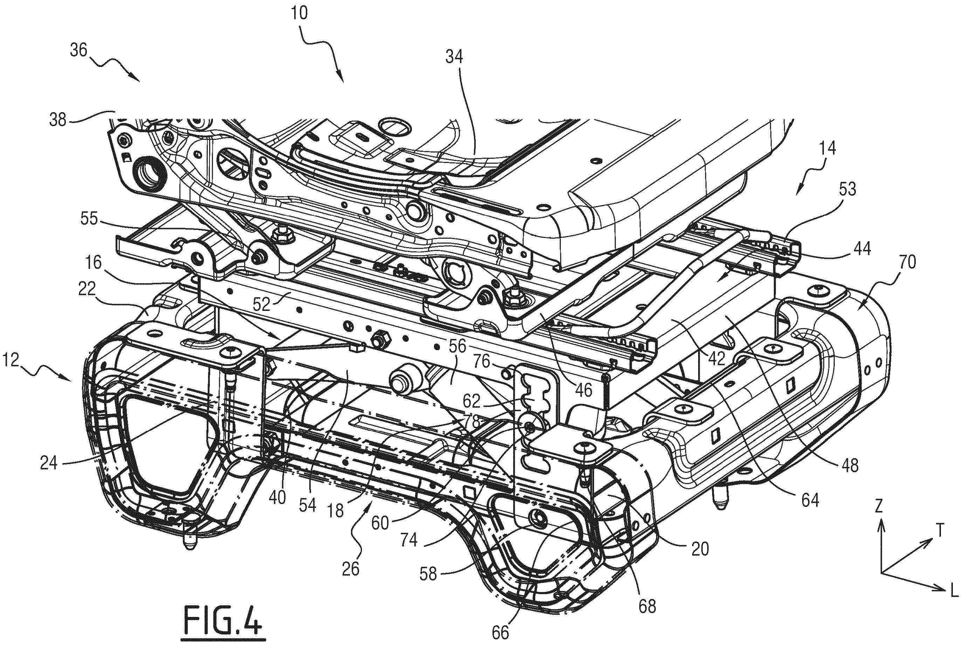

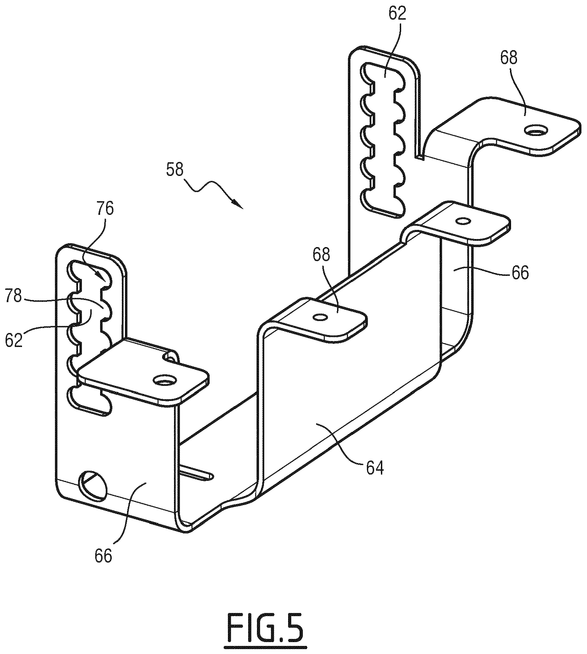

Les figures 4 et 5 présentent un siège 10 selon un deuxième mode de réalisation de l'invention. Ce mode de réalisation sera décrit par différences par rapport au premier mode de réalisation.

Dans ce mode de réalisation, la plaque principale 64 de l'organe de retenue 58 ne comprend pas d'ouverture 62. Ce sont les plaques secondaires 66 qui définissent chacune au moins une ouverture traversante 62 s'étendant selon une direction principale d'élongation sensiblement parallèle à la direction d'élévation Z.

Dans ce mode de réalisation, chaque plaque secondaire 66 comprend une unique ouverture traversante 62.

Les plaques secondaires 66 s'étendent selon un plan principal d'élongation sensiblement parallèle à la direction longitudinale L.

Chaque plaque secondaire s'étend au moins en partie en saillie de la surface supérieure 70 des tronçons latéraux 24 du châssis 12.

Avantageusement, un bord 76 de l'ouverture 62 de chacune des plaques 66 définit une pluralité de logements de retenue 78 adaptés pour retenir l'élément de retenue 60 reçu dans l'ouverture 62 selon la direction de retenue. Chaque logement de retenue 78 présente au moins une portion sensiblement circulaire ou curviligne formant une butée pour la tige de l'élément de maintien 60 en cas de déplacement du plateau selon la direction longitudinale L. Ceci permet au plateau 42 d'être bien maintenu par l'organe de retenue 58 en cas de choc du véhicule en empêchant tout glissement selon la direction d'élévation Z de l'élément de retenue 60 le long du bord 76 de l'ouverture 62.

Dans ce mode de réalisation, l'organe de retenue 58 retient en outre l'élément de retenue 60 selon une direction de retenue sensiblement parallèle à la direction transversale.

Dans ce mode de réalisation, la plaque principale 64 est de préférence totalement en appui contre la paroi avant intérieure du tronçon avant 20 du châssis 12. Les plaques secondaires 66 sont par exemple au moins en partie en appui contre les parois latérales intérieures des tronçons latéraux 24 du châssis 12.

Les éléments de retenue 60 sont fixés sur les parois latérales 52 du plateau. Plus particulièrement, chaque élément de retenue 60 s'étend en saillie de sa paroi respective 48, 50 selon une direction sensiblement perpendiculaire à la paroi 48, 50 respective et sensiblement parallèle à la direction transversale T.

Dans ce mode de réalisation particulier, le système de retenue 18 comprend un unique élément de retenue 60 sur chacune des parois latérales 52 du plateau 42.

Bien entendu, en variante, le système de retenue 18 peut comprendre plusieurs éléments de retenues fixés sur les parois latérales 52 du plateau. Dans ce cas, les organes de retenue 58 comprennent le même nombre d'ouvertures traversantes 62 pour recevoir ces éléments de retenue 60.

Ainsi, le siège selon l'invention est particulièrement avantageux car, grâce aux organes de retenue et aux éléments de retenue, le plateau du dispositif de réglage et de suspension ne peut pas se déplacer vers l'avant selon la direction longitudinale par rapport au châssis lors d'un choc du véhicule et ceci peu importe la position du plateau selon la direction d'élévation.

Plus particulièrement, lors du choc, le plateau et l'assise ne peuvent plus pivoter par rapport au châssis, le déplacement du bassin de l'occupant du siège est limité et la sécurité de l'occupant est améliorée.

## Revendications

1. Siège (10) pour véhicule, ledit siège (10) comprenant :
- un châssis (12) destiné à être monté sur un plancher du véhicule,
- une assise (14),
- un dispositif de réglage et de suspension (16) comportant une base (40) fixée sur le châssis (12) et un plateau (42) fixé sur une surface inférieure (46) de l'assise (14), le plateau (42) étant monté mobile en translation par rapport à la base (40) selon une direction d'élévation (Z), un système de retenue (18) retenant le plateau (42) du dispositif de réglage et de suspension (16) sur le châssis (12), le système de retenue (18) comprenant :
- au moins un organe de retenue (58) fixé sur le châssis (12), l'organe de retenue (58) définissant au moins une ouverture traversante (62) s'étendant selon une direction principale d'élongation sensiblement parallèle à la direction d'élévation (Z),
- au moins un élément de retenue (60) fixé sur le plateau (42), l'ouverture traversante (62) de l'organe de retenue (58) recevant l'élément de retenue (60) libre en translation selon la direction principale d'élongation, l'ouverture traversante (62) étant apte à retenir ledit élément de retenue (60) selon une direction de retenue sensiblement perpendiculaire à la direction verticale (Z) en cas de choc du véhicule, **caractérisé en ce que** le châssis comprend un tronçon avant (20) et un tronçon arrière (22) s'étendant chacun selon une direction sensiblement parallèle à la direction transversale (T), et deux tronçons latéraux (24) reliant les tronçons avant (20) et arrière (22) et s'étendant chacun selon une direction parallèle à la direction longitudinale (L), chacun des tronçons avant (20), arrière (22) et latéraux (24) comprend respectivement une paroi avant intérieure, une paroi arrière intérieure et deux parois latérales intérieures définissant entre elles un logement central (26) recevant le dispositif de réglage et de suspension (16).

2. Siège (10) selon la revendication 1, dans lequel le système de retenue (18) comprend :
- deux organes de retenue (58) fixés sur le châssis (12), chaque organe de retenue (58) définissant au moins une ouverture traversante (62) s'étendant selon une direction principale d'élongation sensiblement parallèle à la direction d'élévation (Z),
- au moins deux éléments de retenue (60) fixés sur deux parois (48, 50 ; 52) opposées du plateau (42), les deux parois (48, 50 ; 52) s'étendant principalement selon une direction longitudinale (L) ou selon une direction transversale (T), les directions longitudinale (L) et transversale (T) étant sensiblement perpendiculaires à la direction d'élévation (Z).

3. Siège (10) selon la revendication 2, dans lequel le ou chaque élément de retenue (60) s'étend en saillie de la paroi (48, 50 ; 52) sur laquelle ledit élément de retenue (60) est fixé.

4. Siège (10) selon la revendication 2 ou 3, dans lequel les organes de retenue (58) sont disposés à l'opposé l'un de l'autre, de part et d'autre du châssis (12).

5. Siège (10) selon l'une quelconque des revendications 1 à 4, dans lequel le ou chaque organe de retenue (58) définit deux ouvertures traversantes (62) s'étendant chacune selon une direction d'élongation sensiblement parallèle à la direction d'élévation (Z), le plateau (42) comprenant quatre éléments de retenue (60) reçus deux à deux dans les ouvertures traversantes (62) des organes de retenue (58).

6. Siège (10) selon l'une quelconque des revendications 1 à 5, dans lequel le ou chaque organe de retenue (58) comprend au moins une plaque (64 ; 66) définissant la ou les ouverture(s) (62) et s'étendant principalement selon un plan d'élongation au moins en partie en saillie d'une surface supérieure du châssis (12), ledit plan d'élongation étant sensiblement parallèle à la direction d'élévation (Z).

7. Siège selon la revendication 6, dans lequel le plan d'élongation de la plaque (64) est sensiblement parallèle à la direction transversale (T).

8. Siège selon la revendication 6 ou 7, dans lequel la ou chaque plaque (64) est fixée sensiblement à équidistance des tronçons latéraux (24) le long des tronçon avant (20) et tronçon arrière (22).

9. Siège (10) selon la revendication 6, dans lequel le plan d'élongation de la plaque (66) est sensiblement parallèle à la direction longitudinale (L), un bord (76) de l'ouverture traversante (62) définissant une pluralité de logements de retenue (78) adaptés pour retenir l'élément de retenue (60) reçu dans l'ouverture traversante (62) selon la direction de retenue.

## Patentansprüche

1. Sitz (10) für Fahrzeug, wobei der Sitz (10) umfasst:
- ein Gestell (12), das zur Anbringung auf einem Boden des Fahrzeugs bestimmt ist,
- eine Sitzfläche (14),
- eine Einstell- und Aufhängungsvorrichtung (16), die eine an dem Gestell (12) befestigte Basis (40) und eine an einer unteren Fläche (46) der Sitzfläche (14) befestigte Platte (42) umfasst, wobei die Platte (42) translatorisch beweglich in Bezug auf die Basis (40) gemäß einer Erhebungsrichtung (Z) angebracht ist,
- ein Rückhaltesystem (18), das die Platte (42) der Einstell- und Aufhängungsvorrichtung (16) an dem Gestell (12) zurückhält, wobei das Rückhaltesystem (18) umfasst:
- mindestens ein Rückhalteorgan (58), das an dem Gestell (12) befestigt ist, wobei das Rückhalteorgan (58) mindestens eine Durchgangsöffnung (62) definiert, die sich gemäß einer Hauptdehnungsrichtung erstreckt, die im Wesentlichen parallel zu der Erhebungsrichtung (Z) ist,
- mindestens ein Rückhalteelement (60), das an der Platte (42) befestigt ist, wobei die Durchgangsöffnung (62) des Rückhalteorgans (58) das Rückhalteelement (60) translatorisch frei gemäß der Hauptdehnungsrichtung aufnimmt, wobei die Durchgangsöffnung (62) geeignet ist, das Rückhalteelement (60) gemäß einer Rückhalterichtung im Wesentlichen senkrecht zur vertikalen Richtung (Z) bei einem Aufpralls des Fahrzeugs zurückzuhalten, **dadurch gekennzeichnet, dass** das Gestell einen vorderen Abschnitt (20) und einen hinteren Abschnitt (22) umfasst, die sich jeweils gemäß einer Richtung erstrecken, die im Wesentlichen parallel zur Querrichtung (T) ist, und zwei seitliche Abschnitte (24), die den vorderen (20) und hinteren (22) Abschnitt verbinden und sich jeweils gemäß einer Richtung erstrecken, die zur Längsrichtung (L) parallel ist, wobei jeder von dem vorderen (20), hinteren (22) und seitlichen (24) Abschnitten jeweils eine innere Vorderwand, eine innere Rückwand und zwei innere Seitenwände umfassen, die zwischen sich eine zentrale Aufnahme (26) definieren, welche die Einstell- und Aufhängungsvorrichtung (16) aufnimmt.

2. Sitz (10) nach Anspruch 1, wobei das Rückhaltesystem (18) umfasst:
- zwei Rückhalteorgane (58), die an dem Gestell (12) befestigt sind, wobei jedes Rückhalteorgan (58) mindestens eine Durchgangsöffnung (62) definiert, die sich gemäß einer Hauptdehnungsrichtung erstreckt, die im Wesentlichen parallel zu der Erhebungsrichtung (Z) ist,
- mindestens zwei Rückhalteelemente (60), die an zwei gegenüberliegenden Wänden (48, 50; 52) der Platte (42) befestigt sind, wobei sich die beiden Wände (48, 50; 52) hauptsächlich gemäß einer Längsrichtung (L) oder gemäß einer Querrichtung (T) erstrecken, wobei die Längsrichtung (L) und die Querrichtung (T) im Wesentlichen senkrecht zu der Erhebungsrichtung (Z) sind.

3. Sitz (10) nach Anspruch 2, wobei sich das oder jedes Rückhalteelement (60) von der Wand (48, 50; 52), an der das Rückhalteelement (60) befestigt ist, vorstehend erstreckt.

4. Sitz (10) nach Anspruch 2 oder 3, wobei die Rückhalteorgane (58) einander gegenüberliegend auf beiden Seiten des Gestells (12) angeordnet sind.

5. Sitz (10) nach einem der Ansprüche 1 bis 4, wobei das oder jedes Rückhalteorgan (58) zwei Durchgangsöffnungen (62) definiert, die sich jeweils gemäß einer Dehnungsrichtung erstrecken, die im Wesentlichen parallel zu der Erhebungsrichtung (Z) ist, wobei die Platte (42) vier Rückhalteelemente (60) umfasst, die paarweise in den Durchgangsöffnungen (62) der Rückhalteorgane (58) aufgenommen sind.

6. Sitz (10) nach einem der Ansprüche 1 bis 5, wobei das oder jedes Rückhalteorgan (58) mindestens eine Platte (64; 66) umfasst, die die Öffnung(en) (62) definiert und sich hauptsächlich gemäß einer Dehnungsebene zumindest teilweise von einer oberen Fläche des Gestells (12) vorstehend erstreckt, wobei die Dehnungsebene im Wesentlichen parallel zu der Erhebungsrichtung (Z) ist.

7. Sitz nach Anspruch 6, wobei die Dehnungsebene der Platte (64) im Wesentlichen parallel zur Querrichtung (T) ist.

8. Sitz nach Anspruch 6 oder 7, wobei die oder jede Platte (64) im Wesentlichen in gleichem Abstand zu den seitlichen Abschnitten (24) entlang des vorderen Abschnitts (20) und des hinteren Abschnitts (22) befestigt ist.

9. Sitz (10) nach Anspruch 6, wobei die Dehnungsebene der Platte (66) im Wesentlichen parallel zur Längsrichtung (L) ist, wobei eine Kante (76) der Durchgangsöffnung (62) eine Vielzahl von Rückhalteaufnahmen (78) definiert, die zum Zurückhalten des in der Durchgangsöffnung (62) aufgenommenen Rückhaltelements (60) gemäß der Rückhalterichtung geeignet sind.

## Claims

1. A seat (10) for a vehicle, said seat (10) comprising:
- a frame (12) intended to be mounted on a floor of the vehicle,
- a seat cushion (14),
- an adjustment and suspension device (16) comprising a base (40) fixed to the frame (12) and a supporting plate (42) fixed to a lower surface (46) of the seat cushion (14), the supporting plate (42) being mounted movable in translation relative to the base (40) in a direction of elevation (Z),
- a restraint system (18) restraining the supporting plate (42) of the adjustment and suspension device (16) on the frame (12), the restraint system (18) comprising:
- at least one restraint member (58) fixed to the frame (12), the restraint member (58) defining at least one through opening (62) extending along a main direction of elongation parallel to the direction of elevation (Z),
- at least one restraint element (60) fixed to the supporting plate (42), the through opening (62) of the restraint member (58) receiving the restraint element (60) free in translation along the main direction of elongation, the through opening (62) being capable of restraining said restraint element (60) along a restraint direction perpendicular to the vertical direction (Z) in the event of vehicle impact, **characterized in that** the frame comprises a front section (20) and a rear section (22) each mainly extending along a direction parallel to the transverse direction (T) and two side sections (24) connecting the front (20) and rear (22) sections and each mainly extending along a direction parallel to the longitudinal direction (L), each of the front section (20), rear section (22) and side sections (24) respectively comprising an inner front wall, an inner rear wall and two inner side walls defining between them a central housing (26) receiving the adjustment and suspension device (16).

2. The seat (10) according to claim 1, wherein the restraint system (18) comprises:
- two restraint members (58) fixed to the frame (12), each restraint member (58) defining at least one through opening (62) extending along a main direction of elongation parallel to the direction of elevation (Z),
- at least two restraint elements (60) fixed to two walls (48, 50; 52) opposite the supporting plate (42), the two walls (48, 50; 52) mainly extending along a longitudinal direction (L) or along a transverse direction (T), the longitudinal (L) and transverse (T) directions being perpendicular to the direction of elevation (Z).

3. The seat (10) according to claim 2, wherein the or each restraint element (60) protrudes from the wall (48, 50; 52) to which said restraint element (60) is fixed.

4. The seat (10) according to claim 2 or 3, wherein the restraint members (58) are arranged opposite each other on opposite sides of the frame (12).

5. The seat (10) according to anyone of claims 1 to 4, wherein the or each restraint member (58) defines two through openings (62) each extending along a direction of elongation parallel to the direction of elevation (Z), the supporting plate (42) comprising four restraint elements (60) received in pairs in the through openings (62) of the restraint members (58).

6. The seat (10) according to anyone of claims 1 to 5, wherein the or each restraint member (58) comprises at least one plate (64; 66) defining the opening(s) (62) and mainly extending along a elongation plane at least partly projecting from an upper surface of the frame (12), said elongation plane being parallel to the direction of elevation (Z).

7. The seat according to claim 6, wherein the elongation plane of the plate (64) is parallel to the transverse direction (T).

8. The seat according to claim 6 or 7, the or each plate (64) is fixed equidistant from the side sections (24) along the front section (20) and rear section (22).

9. The seat (10) according to claim 6, wherein the elongation plane of the plate (66) is parallel to the longitudinal direction (L), an edge (76) of the through opening (62) defining a plurality of restraint housings (78) adapted to restrain the restraint element (60) received in the through opening (62) along the direction of restraint.
